# FASCICULE DE BREVET EUROPEEN

(11) **EP 0 926 000 B1**
(45) Date de publication et mention de la délivrance du brevet: **09.04.2003**
(21) Numéro de dépôt: 98403217.7
(22) Date de dépôt: 18.12.1998
(51) Int. Cl.: B60P 3/04

(54) **Remorque de type van pour le transport des chevaux**
Kleintransportanhänger zum Transport von Pferden
Van-type trailer for transport of horses

(30) Priorité: 18.12.1997 FR 9716540
(43) Date de publication de la demande: 30.06.1999
(73) Titulaire: Fautras, Jean-Luc, 47120 Saint Sernin de Duras (FR)
(72) Inventeur: Fautras, Jean-Luc, 47120 Saint Sernin de Duras (FR)
(74) Mandataire: Dronne, Guy

(56) Documents cités:
- WO-A-93/13959
- FR-A- 2 707 571
- GB-A- 474 864
- GB-A- 792 679

## Description

La présente invention concerne une remorque de type van pour le transport des chevaux et autres animaux dits de gros bétail.

Elle concerne plus particulièrement l'aménagement des vans afin de faciliter l'embarquement et le transport des chevaux. L'aménagement porte le plus souvent sur la conception et la réalisation des ouvertures, selon les caractéristiques du préambule de la revendication 1.

Le brevet FAUTRAS FR-A-2 707 571 concerne un tel ensemble van-box agencé pour le transport et/ou l'hébergement des chevaux.

Le brevet DUPHIL WO 93/25406 concerne deux ouvertures dont l'une comporte deux ouvertures se verrouillant mutuellement de façon à présenter une ouverture très large facilitant l'embarquement. L'aménagement des ouvertures permet en outre de réaliser des vans à usages multiples.

Le brevet PINAUD FR-A-2 635 736 décrit un "van écurie" utilisable pour le transport et l'hébergement des chevaux.

Le brevet GUILLOUX FR-A-2 683 195 décrit une remorque évolutive à usages multiples comportant un plancher horizontal modulable.

Pour faciliter l'accès des chevaux au van, il est d'usage d'avoir recours à une porte basculante.

Le brevet ATTARD FR-A-2 725 682 concerne une remorque perfectionnée dont la structure porteuse monocorps comporte une ouverture basculante facilitant l'embarquement des chevaux.

Le brevet CHATTERTON WO 93/13959 montre un van présentant une ouverture basculante de forme trapézoïdale destinée d'une part à faciliter l'embarquement des chevaux et d'autre part à augmenter la surface disponible au niveau des pattes pendant le transport, ce qui se traduit en fait par un rétrécissement de la section de la toiture.

Il est par ailleurs connu, pour faciliter l'embarquement des chevaux dans le van, d'utiliser une marche coulissante placée sous le plancher. Cette marche supplémentaire présente cependant l'inconvénient de limiter la garde au sol du van, ce qui peut en limiter son utilisation à des revêtements de sol unis.

L'utilisation d'une porte-plancher basculante présente l'avantage de s'appuyer sur le sol au moment de l'embarquement. Cette solution nécessite la fermeture de la partie haute au-dessus de la porte basculante. En outre, elle ne permet pas l'utilisation d'une porte à deux vantaux.

Les solutions apportées par l'art antérieur ne résolvent qu'en partie les problèmes posés: faciliter l'embarquement sans trop diminuer la garde au sol, construction simple, peu onéreuse, facile à mettre en oeuvre, augmenter le confort et la sécurité du cheval au cours du transport.

La présente invention se propose précisément de pallier les inconvénients de l'art antérieur et d'apporter des solutions aux problèmes posés.

La remorque de type van pour le transport des chevaux selon l'invention comporte en combinaison, un châssis monté sur roues, sur lequel sont fixés un plancher et une paroi périphérique sensiblement verticale comprenant deux parois latérales et munie d'au moins une porte d'accès surmontée d'une toiture formant carrosserie, ladite remorque se caractérise en ce que le plancher est réalisé en deux parties jointes, l'une horizontale à l'avant, l'autre à l'arrière inclinée vers le sol de façon à faciliter l'accès du van aux chevaux, et en ce que lesdites parois latérales vont en s'écartant l'une de l'autre vers l'arrière sur la partie arrière de ladite remorque au moins dans leur partie inférieure.

Avantageusement, la partie inclinée du plancher est de forme trapézoïdale dont la petite base est jointe à la partie horizontale du plancher et dont la grande base forme l'arrière du van, de façon à agrandir la place disponible.

Selon une variante de réalisation, la jonction des deux parties du plancher, horizontale et inclinée, est opérée à l'aide d'une marche de faible hauteur.

Selon une autre variante, la partie inclinée du plancher est une surface convexe et/ou concave.

De préférence, la paroi périphérique sensiblement verticale raccordée à la toiture et formant carrosserie est fixée sur le pourtour des parties horizontale et inclinée du plancher.

Ainsi, le plancher selon l'invention comporte deux parties dont la partie arrière est inclinée pour faciliter l'embarquement des chevaux. Cette partie arrière est fixe, contrairement à l'art antérieur qui essentiellement met en oeuvre soit une porte basculante, soit une marche coulissante. C'est donc par construction que cette surface est obtenue. Elle permet donc une grande rigidité sans trop limiter la garde au sol.

En outre, cette surface peut être plane, convexe, concave ou présenter une partie convexe raccordée au plancher horizontal à l'aide d'une partie concave.

Cette surface peut être soit directement raccordée à la partie horizontale du plancher, soit par l'intermédiaire d'une petite marche. La marche peut également être constituée d'une partie concave raccordée à une surface convexe. L'essentiel est d'augmenter le confort du cheval au cours du transport. Les pattes arrière du cheval, reposant sur une surface de niveau légèrement inférieur à celui horizontal des pattes avant, facilitent l'arc-boutement du cheval en cas de freinage.

Par ailleurs, ce plan incliné peut, soit avoir la même largeur que la partie horizontale, se présentant ainsi comme un van classique, soit être constitué par une surface trapézoïdale de façon que la petite base soit raccordée à la partie horizontale et la grande base située vers l'arrière. Cette surface trapézoïdale augmente vers l'arrière la place disponible de quelque 20 à 30 cm ajoutant ainsi au confort constitué par le plan incliné. Cette surface trapézoïdale étant soit plane, soit convexe, raccordée directement à la partie horizontale du plancher ou par l'intermédiaire d'une petite marche.

Avantageusement la toiture surmontant la paroi sensiblement verticale formant carrosserie est de section croissante à partir du droit de la petite base du plancher incliné de forme trapézoïdale jusqu'au droit de la grande base dudit plancher.

Selon une autre variante de réalisation, la toiture surmontant la paroi sensiblement verticale formant carrosserie est de section constante sur toute sa longueur tant dans la partie horizontale que dans la partie inclinée du plancher de forme trapézoïdale de façon à former une cavité en forme de coin permettant d'agrandir la place disponible vers l'arrière.

Le raccordement entre le plancher et la toiture peut se faire de deux façons différentes. La solution la plus évidente est de faire un raccordement de la toiture au droit de la carrosserie, de sorte que la section de la toiture augmente suivant la largeur des côtés du trapèze. Une autre solution consiste à avoir une section constante pour la toiture, le raccordement à la carrosserie étant effectué par des pans coupés. L'essentiel étant d'augmenter pour les chevaux la surface disponible vers l'arrière.

De préférence, le châssis sur lequel sont fixés le plancher réalisé en deux parties jointes et la paroi périphérique surmontée d'une toiture formant carrosserie est constitué de longerons reliés entre eux par des poutres transversales.

Selon une autre variante de construction, le plancher réalisé en deux parties jointes constitue avec le châssis une structure autoporteuse sur laquelle est fixée la paroi périphérique surmontée d'une toiture formant carrosserie.

Tout autre type de construction permettant de réaliser le plancher du van en deux parties dont une inclinée entrerait dans le cadre de la présente invention. Il en serait de même si la surface de la partie inclinée comportait des côtés du trapèze autres que rectilignes.

D'autres caractéristiques et avantages de la présente invention seront mieux compris à l'aide de la description suivante d'un exemple de réalisation donné à titre illustratif et non limitatif, en référence aux dessins schématiques annexés.

La Figure 1 est une vue schématique de profil du van selon l'invention.

La Figure 2 est une vue schématique en plan du plancher du van.

Les Figures 3 sont des vues schématiques en coupe des diverses formes de plancher du van.

Les Figures 4 sont des vues schématiques arrière du van.

Quelques dimensions représentatives seront données à titre illustratif.

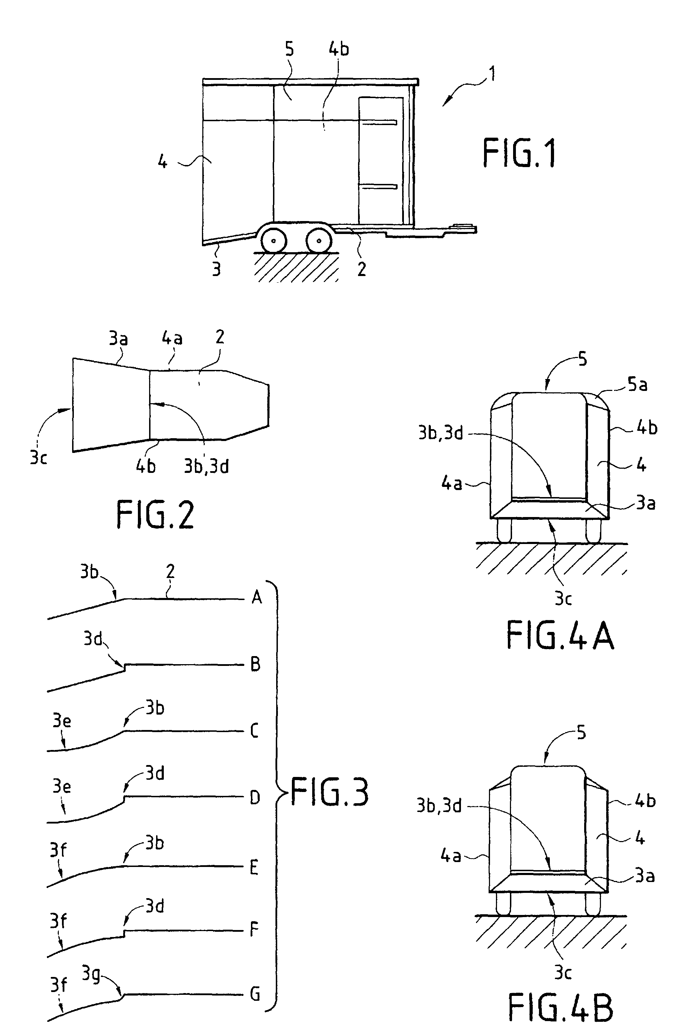

On a représenté sur la Figure 1, selon une vue schématique de profil, le van 1 selon l'invention comportant un plancher dont une partie est horizontale 2 et une partie inclinée 3 vers le sol à l'arrière. La carrosserie 4 qui comporte les parois latérales 4a et 4b est raccordée au plancher 2-3 et à la toiture 5.

On montre sur la Figure 2, selon une vue schématique en plan, le plancher du van comportant les deux parties du plancher, horizontale 2 inclinée 3. Selon un mode préféré, la partie inclinée 3a est de forme trapézoïdale, la petite base 3b est raccordée à la partie horizontale 2 du plancher alors que la grande base 3c est à l'arrière. Ainsi, l'écartement entre les parois latérales 4a et 4b va en augmentant vers l'arrière de la remorque. La largeur du plancher horizontal, soit la petite base 3b/3d du trapèze est d'environ 160 cm alors que la grande base 3c mesure environ 190 cm. La longueur de la partie inclinée est de 70 à 80 cm. Le plancher est à une hauteur de 40 cm environ, la garde au sol au niveau de la grande base 3c est de l'ordre de 25 cm, la marche 3d est de 3 à 4 cm. Cette garde au sol n'est que de 15 à 20 cm pour une marche coulissante.

On a représenté sur les Figures 3 les différents profils de plancher selon l'invention. Ces profils sont des coupes schématiques des planchers représentés sur la Figure 2, c'est-à-dire que soit la partie inclinée 3 du plancher est de même largeur que la partie horizontale 2, soit la partie inclinée 3a est constituée d'une surface trapézoïdale.

Ainsi, le profil A représente les deux parties planes horizontale 2 et inclinées 3 ou 3a jointives selon 3b.

Le profil B montre en 3d une jonction constituée d'une marche de faible hauteur entre les deux parties planes 2 et 3 ou 3a.

Les profils C et D représentent la partie inclinée 3e constituée d'une surface concave raccordée à la partie horizontale 2, soit de façon jointive, soit à l'aide d'une marche 3d de faible hauteur.

Les profils E et F représentent la partie inclinée 3f constituée d'une surface convexe raccordée à la partie horizontale 2 soit de façon jointive 3b, soit à l'aide d'une marche 3d de faible hauteur.

Le profil G représente la partie inclinée 3f constituée d'une surface convexe raccordée à la partie horizontale 2 à l'aide d'une surface concave 3g.

Sur les Figures 4, on montre, selon des vues schématiques, vue arrière, un van selon l'invention dont la partie inclinée 3a de forme trapézoïdale est raccordée à la partie horizontale 2 par l'intermédiaire d'une marche 3b/3d de faible hauteur. Les portes arrière constituées de deux vantaux ne sont pas représentées.

Sur la Figure 4A, la carrosserie 4 sensiblement verticale est raccordée au droit de la toiture 5 de sorte que la section de la toiture 5a va en croissant à partir du droit de la petite base 3b/3d du trapèze jusqu'au droit de la grande base 3c.

Sur la vue B, la toiture 5 est de section constante, de sorte que la carrosserie 4 est raccordée à la toiture 5 au-dessus du plan incliné 3a par des pans coupés 5b de façon que la partie agrandie au droit de la partie inclinée 3a soit disponible jusqu'à une hauteur compatible avec le gabarit des chevaux.

En d'autres termes, seule la partie inférieure des parois latérales va en augmentant de largeur.

Plus généralement, selon l'invention, la partie arrière du plancher est à la fois inclinée et a une largeur qui va en augmentant vers l'arrière du véhicule. Dans l'exemple décrit selon lequel la partie arrière du plancher est trapézoïdale, il y a coïncidence entre le début de la portion inclinée du plancher et le début de la portion du plancher dont la largeur va en augmentant. Cependant, on ne sortirait pas de l'invention si les débuts de ces deux parties ne coïncidaient pas.

La réalisation du plancher peut se faire selon deux techniques utilisées en construction mécanique. Bien que non représentées, ces techniques sont soit la constitution d'un châssis avec au moins deux longerons reliés entre eux par des poutres transversales, recouvert en tôles mécano-soudées ou tout autre revêtement, soit la réalisation d'une structure autoporteuse avec le plancher et des caissons constituant le châssis.

Le van selon l'invention, avec son plancher en deux parties dont l'une inclinée, répond bien aux buts recherchés.

Simple à réaliser, peu onéreux, il facilite l'embarquement des chevaux en augmentant l'espace qui leur est réservé, ajoute à leur confort et à leur sécurité, notamment en cas de freinage.

## Revendications

1. Remorque de type van (1) pour le transport des chevaux, comportant en combinaison, un châssis monté sur roues, sur lequel sont fixés un plancher (2-3) et une paroi périphérique (4) sensiblement verticale comportant deux parois latérales et munie d'au moins une porte d'accès surmontée d'une toiture (5) formant carrosserie, **caractérisée en ce que** le plancher est réalisé en deux parties jointes, l'une horizontale (2) à l'avant, l'autre (3) à l'arrière inclinée vers le sol de façon à faciliter l'accès du van aux chevaux et **en ce que** les parois latérales vont en s'écartant l'une de l'autre vers l'arrière sur la partie arrière de ladite remorque au moins dans leur partie inférieure.

2. Remorque de type van pour le transport des chevaux selon la revendication 1, **caractérisée en ce que** la partie inclinée (3) du plancher est de forme trapézoïdale (3a) dont la petite base (3b) est jointe à la partie horizontale du plancher et dont la grande base (3c) forme l'arrière du van (1), de façon à agrandir la place disponible.

3. Remorque de type van pour le transport des chevaux selon la revendication 2, **caractérisée en ce que** la jonction (3b) des deux parties du plancher, horizontale (2) et inclinée (3), est opérée à l'aide d'une marche (3d) de faible hauteur.

4. Remorque de type van pour le transport des chevaux selon l'une quelconque des revendications 2 ou 3, **caractérisée en ce que** la partie inclinée (3) du plancher est une surface convexe (3e) et/ou concave (3f).

5. Remorque de type van pour le transport des chevaux selon l'une quelconque des revendications 2, 3 ou 4, **caractérisée en ce que** la paroi périphérique (4) sensiblement verticale raccordée à la toiture (5) et formant carrosserie est fixée sur le pourtour des parties horizontale (2) et inclinée (3) du plancher

6. Remorque de type van pour le transport des chevaux selon la revendication 5, **caractérisée en ce que** la toiture (5) surmontant la paroi (4) sensiblement verticale formant carrosserie est de section croissante à partir du droit de la petite base (3b) du plancher incliné de forme trapézoïdale jusqu'au droit de la grande base (3c) dudit plancher.

7. Remorque de type van pour le transport des chevaux selon la revendication 5, **caractérisée en ce que** la toiture (5) surmontant la paroi sensiblement verticale formant carrosserie est de section constante sur toute sa longueur tant dans la partie horizontale (2) que dans la partie inclinée du plancher de forme trapézoïdale (3a) de façon à former une cavité en forme de coin (5a) permettant d'agrandir la place disponible vers l'arrière.

8. Remorque de type van pour le transport des chevaux selon l'une quelconque des revendications précédentes, **caractérisée en ce que** le châssis, sur lequel sont fixés le plancher réalisé en deux parties jointes (2-3) et la paroi périphérique (4) surmontée d'une toiture formant carrosserie, est constitué de longerons reliés entre eux par des poutres transversales.

9. Remorque de type van pour le transport des chevaux selon l'une quelconque des revendications 1 à 7, **caractérisée en ce que** le plancher réalisé en deux parties jointes (2.-3) constitue avec le châssis une structure autoporteuse sur laquelle est fixée la paroi périphérique (4) surmontée d'une toiture (5) formant carrosserie.

10. Remorque de type van pour le transport des chevaux selon la revendication 1, **caractérisé en ce que** la longueur du plancher dans sa partie arrière va en augmentant et **en ce que** la largeur de la toiture est constante.

## Claims

1. Van-type trailer (1) for the transport of horses, having in combination, a chassis mounted on wheels, on which are fixed a floor (2-3) and a substantially vertical peripheral wall (4) having two side walls and provided with at least one access door surmounted by a roof (5) forming bodywork, **characterised in that** the floor is made in two joined portions, a horizontal one (2) at the front, the other one (3) at the rear sloping towards the ground in order to facilitate access to the van by horses and **in that** the side walls diverge from one another towards the rear on the rear portion of said trailer at least in their lower portion.

2. Van-type trailer for the transport of horses according to Claim 1, **characterised in that** the sloping portion (3) of the floor is in the form of a trapezoid (3a), the small base (3b) of which is joined to the horizontal portion of the floor and the large base (3c) of which forms the rear of the van (1), so as to increase the space available.

3. Van-type trailer for the transport of horses according to Claim 2, **characterised in that** the junction (3b) of the two portions of the floor, horizontal (2) and sloping (3), is produced with a shallow step (3d).

4. Van-type trailer for the transport of horses according to either one of Claims 2 or 3, **characterised in that** the sloping portion (3) of the floor is a convex (3e) and/or concave (3f) surface.

5. Van-type trailer for the transport of horses according to any one of Claims 2, 3 or 4, **characterised in that** the substantially vertical peripheral wall (4) connected to the roof (5) and forming bodywork is fixed to the periphery of the horizontal (2) and sloping (3) portions of the floor.

6. Van-type trailer for the transport of horses according to Claim 5, **characterised in that** the roof (5) surmounting the substantially vertical wall (4) forming bodywork has a section that increases from directly above the small base (3b) of the sloping floor of trapezoidal form to directly above the large base (3c) of said floor.

7. Van-type trailer for the transport of horses according to Claim 5, **characterised in that** the roof (5) surmounting the substantially vertical wall forming bodywork has a constant section over its whole length both in the horizontal portion (2) and in the sloping, trapezoidal portion of the floor (3a) in order to form a comer-shaped cavity (5a) making it possible to increase the space available towards the rear.

8. Van-type trailer for the transport of horses according to any one of the preceding claims, **characterised in that** the chassis, on which are fixed the floor made in two joined portions (2-3) and the peripheral wall (4) surmounted by a roof forming bodywork, is constituted by side members connected together by cross-beams.

9. Van-type trailer for the transport of horses according to any one of Claims 1 to 7, **characterised in that** the floor made in two joined portions (2.-3) constitutes, together with the chassis, a self-supporting structure on which is fixed the peripheral wall (4) surmounted by a roof (5) forming bodywork.

10. Van-type trailer for the transport of horses according to Claim 1, **characterised in that** the length of the floor increases in its rear portion and **in that** the width of the roof is constant.

## Patentansprüche

1. Kleintransportanhänger (1) zum Transport von Pferden, in Kombination umfassend ein auf Rädern gelagertes Fahrgestell, auf dem ein Boden (2-3) und eine im wesentlichen vertikale Umfangswand (4) mit zwei Seitenwänden und zumindest einer Zugangstür befestigt sind, karosseriebildend übergriffen von einem Dach (5), **dadurch gekennzeichnet, dass** der Boden aus zwei zusammengefügten Teilen hergestellt ist, von denen der vordere Teil (2) horizontal verläuft und der hintere Teil (3) derart zum Erdboden geneigt ist, dass für Pferde der Zutritt in den Anhänger erleichtert ist, und dass die Seitenwände sich im hinteren Tei! des genannten Anhängers zumindest in ihrem unteren Bereich nach hinten voneinander entfernen.

2. Kleintransportanhänger zum Transport von Pferden nach Anspruch 1, **dadurch gekennzeichnet, dass** der geneigte Teil (3) des Bodens eine trapezartige Form (3a) ausweist, deren kleinere Grundlinie (3b) an den horizontal verlaufenden Teil des Bodens angefügt ist und deren größere Grundlinie (3c) die Hinterseite des Anhängers (1) bildet, so dass der verfügbare Raum vergrößert wird.

3. Kleintransportanhänger zum Transport von Pferden nach Anspruch 2, **dadurch gekennzeichnet, dass** die Verbindung (3b) der beiden Bodenteile, nämlich des horizontalen Teils (2) und des geneigten Teils (3), mit Hilfe einer Trittstufe (3d) geringer Höhe ausgeführt ist.

4. Kleintransportanhänger zum Transport von Pferden nach Anspruch 2 oder 3, **dadurch gekennzeichnet, dass** der geneigte Teil (3) des Bodens eine konvexe Fläche (3e) und/oder eine konkave Fläche (3f) ist.

5. Kleintransportanhänger zum Transport von Pferden nach einem der Ansprüche 2 bis 4, **dadurch gekennzeichnet, dass** die mit dem Dach (5) verbundene und karosseriebildende, im wesentlichen vertikale Umfangswand (4) am Umfang des horizontalen Teils (2) und des geneigten Teils (3) des Bodens befestigt ist.

6. Kleintransportanhänger zum Transport von Pferden nach Anspruch 5, **dadurch gekennzeichnet, dass** das die im wesentlichen vertikale Wand (4) karosseriebildend übergreifende Dach (5) sich im Querschnitt ausgehend vom Bereich der kleineren Grundlinie (3b) des geneigten, trapezförmigen Bodens zum Bereich der größeren Grundlinie (3c) des genannten Bodens erweitert.

7. Kleintransportanhänger zum Transport von Pferden nach Anspruch 5, **dadurch gekennzeichnet, dass** das die im wesentlichen vertikale Wand (4) karosseriebildend übergreifende Dach (5) über seine gesamte Länge einen konstanten Querschnitt sowohl im horizontalen Teil (2) als auch im geneigten Teil des trapezartigen Bodens (3a) aufweist, so dass es einen Hohlraum in Form eines Keils (5a) bildet, durch den der verfügbare Raum nach hinten erweiterbar ist.

8. Kleintransportanhänger zum Transport von Pferden nach einem der vorangehenden Ansprüche, **dadurch gekennzeichnet, dass** das Fahrgestell, auf dem der aus zwei zusammengefügten Teilen (2-3) hergestellte Boden und die karosseriebildend von einem Dach übergriffene Umfangswand (4) befestigt sind, aus Längsträgern gebildet ist, die durch Querbalken miteinander verbunden sind.

9. Kleintransportanhänger zum Transport von Pferden nach einem der Ansprüche 1 bis 7, **dadurch gekennzeichnet, dass** der aus zwei zusammengefügten Teilen (2-3) hergestellte Boden mit dem Fahrgestell eine selbstragende Struktur bildet, an der die karosseriebildend von einem Dach (5) übergriffene Umfangswand (4) befestigt ist.

10. Kleintransportanhänger zum Transport von Pferden nach Anspruch 1, **dadurch gekennzeichnet, dass** die Länge des Bodens im hinteren Teil sich erweitert und dass die Breite des Dachs konstant ist.
